Europäisches Patentamt

European Patent Office

Office européen des brevets

(19)

(11) Numéro de publication : **0 115 999**
**B1**

(12) # FASCICULE DE BREVET EUROPÉEN

(45) Date de publication du fascicule du brevet :
16.06.87

(51) Int. Cl.⁴ : **F 16 L 59/02**

(21) Numéro de dépôt : **84400224.6**

(22) Date de dépôt : **02.02.84**

---

(54) **Pièce à revêtement calorifuge intégré.**

---

(30) Priorité : **08.02.83 FR 8301958**

(43) Date de publication de la demande :
**15.08.84 Bulletin 84/33**

(45) Mention de la délivrance du brevet :
**16.06.87 Bulletin 87/25**

(84) Etats contractants désignés :
**DE FR GB IT NL**

(56) Documents cités :
**FR-A- 1 124 717**
**FR-A- 2 215 573**
**GB-A- 831 523**
**US-A- 1 890 418**
**US-A- 2 545 030**
**US-A- 3 693 665**

(73) Titulaire : **BRONZAVIA Société dite:**
**207 Boulevard Saint Denis**
**F-92403 Courbevoie (FR)**

(72) Inventeur : **Joly, Claude**
**THOMSON-CSF SCPI 173, bld Haussmann**
**F-75379 Paris Cedex 08 (FR)**

(74) Mandataire : **Grynwald, Albert et al**
**THOMSON-CSF SCPI 19, avenue de Messine**
**F-75008 Paris (FR)**

EP 0 115 999 B1

Jouve, 18, rue St-Denis, 75001 Paris, France

## Description

L'invention est relative à une pièce à revêtement calorifuge intégré.

Les revêtements calorifuges sont utilisés chaque fois qu'il est nécessaire de respecter des conditions d'environnement thermique à l'intérieur et/ou à l'extérieur d'un matériel. Ces conditions peuvent être liées à la sécurité des utilisateurs dudit matériel, ou bien encore à un besoin de ne pas perdre l'énergie calorifique accumulée dans ledit matériel.

Ainsi, les conduits d'échappement des gaz provenant de la combustion dans les moteurs d'avions, de bateaux ou d'autres engins sont calorifugés par souci de sécurité vis-à-vis de l'extérieur et afin de conserver la température des gaz jusqu'à la sortie pour ne pas diminuer le rendement. Il en est de même de certains conduits de transport de liquide.

Mais un revêtement calorifuge est un dispositif qui vient en complément du matériel à protéger et, dans sa conception, certaines conditions doivent être respectées. Il doit notamment ne pas être trop encombrant, être léger, être aisément entretenable, et étanche aux différents produits qui, s'ils s'infiltraient à l'intérieur, nuiraient à son rendement.

Dans le domaine aérodynamique, en particulier, la protection thermique des tuyères d'échappement, impose le cumul de ces conditions.

Des procédés de calorifugeage tels que décrits dans les Brevets Français n° 1 124 717 ou Anglais GB-A-831 523 consistent à utiliser des coquilles de protection thermique réalisées de façon à pouvoir épouser la forme du conduit ou de la paroi à calorifuger. Ces coquilles comportent un matelas calorifuge, généralement en laine minérale, enfermé d'une manière étanche entre deux tôles minces et légères en matériau inoxydable. Le matelas calorifuge peut être composé de plusieurs couches et dans ce cas, les couches sont séparées par des écrans réflecteurs, souvent en aluminium. La forme des coquilles est maintenue par des raidisseurs placés à l'intérieur, entre les deux tôles. La tôle dite intérieure est celle qui est positionnée à proximité de la paroi ou du conduit. L'autre tôle est dite extérieure.

Un tel procédé présente des inconvénients. Tout d'abord, il est difficile de réaliser le calorifugeage à l'aide d'une seule coquille. Il faut utiliser au moins deux coquilles, complémentaires l'une de l'autre. Il est donc nécessaire de prévoir des systèmes de fixation entre les coquilles, pour assurer leur positionnement sur la paroi.

La jonction entre les coquilles entraîne, en outre, un manque de continuité thermique. Il est fréquent, également, que des produits néfastes au rendement s'intercalent entre les coquilles et la paroi.

Les Brevets US-A-1 890 418 et US-A-3 693 665 décrivent des pièces calorifugées permettant de s'affranchir de l'utilisation de coquilles, mais qui présentent cependant des problèmes de rigidité.

En effet, la paroi ou le conduit à calorifuger doit pouvoir supporter des contraintes diverses et avoir une rigidité propre, indépendante de celle du revêtement calorifuge.

La pièce calorifugée selon l'invention, destinée plus particulièrement à des applications aéronautiques, comporte un conduit de transport ou une enceinte de stockage de liquide ou de gaz, au moins une couche de matériau calorifuge disposée autour de la surface extérieure de la paroi de l'enceinte ou du conduit et une paroi extérieure autour du matériau calorifuge. Elle est caractérisée en ce que la paroi extérieure est en tôle mince par rapport à la paroi de l'enceinte ou du conduit et en ce que des raidisseurs radiaux sont disposés entre les deux parois, chaque raidisseur entourant la paroi de l'enceinte ou du conduit, et étant fixé à chacune des deux parois de façon à servir à la fois de renfort à la structure de l'ensemble et de support à ladite paroi extérieure.

De préférence, le matelas calorifuge est emprisonné de manière étanche entre la paroi extérieure et la paroi de l'enceinte ou de conduit. Ainsi il ne se pose plus les problèmes d'étanchéité entre la pièce et le revêtement calorifuge comme dans l'art antérieur.

De préférence, la paroi extérieure est réalisée à l'aide d'une tôle mince positionnée autour de la pièce et du matelas calorifuge. En effet, il n'est pas nécessaire de disposer une paroi extérieure de rigidité importante puisque l'ensemble est renforcé à l'aide des raidisseurs qui servent de maintien à cette paroi extérieure.

Egalement, la réalisation de telles pièces permet de s'affranchir des jonctions inhérentes à l'utilisation des coquilles, et ainsi de supprimer les pertes énergétiques dues à ces jonctions. Surtout, une diminution de poids non négligeable apparaît, en raison de la suppression des dispositifs de fixation et de la tôle intérieure, et de renforts communs à la paroi et au dispositif calorifuge.

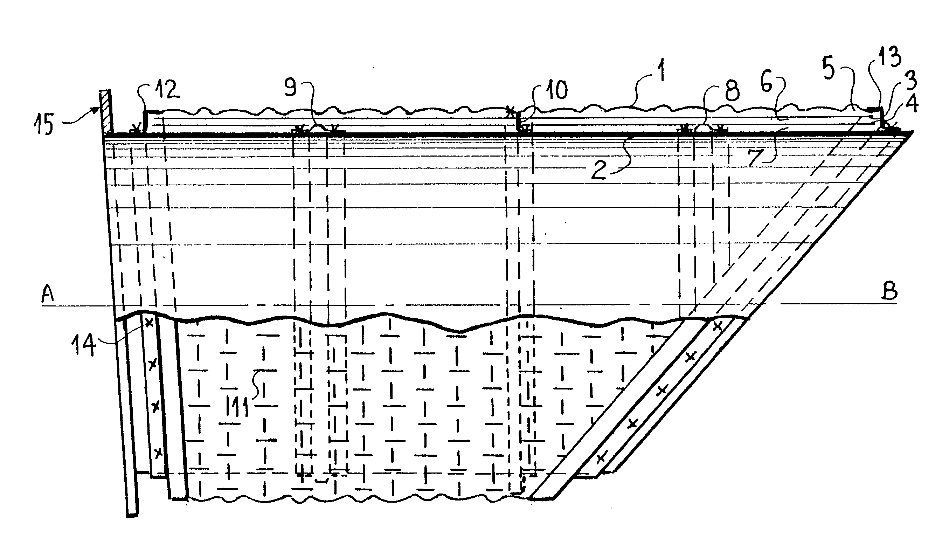

D'autres caractéristiques et avantages de l'invention apparaîtront avec la description d'un exemple de réalisation d'une pièce calorifugée faite en regard de la figure unique ci-annexée, qui représente une tuyère d'avion ou un conduit d'échappement de gaz ainsi calorifugé.

Une partie de la figure située au-dessus d'un axe A.B. montre la structure interne de la tuyère ou du conduit calorifugé selon l'invention et une partie située au-dessous de l'axe A.B. montre l'aspect extérieur de la tuyère ou du conduit.

Dans l'exemple, le conduit comporte une paroi 2 cylindrique d'axe A.B. réalisée à l'aide d'une tôle épaisse. Au moins une couche 7 de matelas calorifuge, par exemple en laine minérale, tapisse toute la surface extérieure de la paroi 2. Une paroi 1 extérieure, cylindrique d'axe A.B., d'un diamètre supérieur à celui de la paroi 2 du conduit dite paroi intérieure, est placée autour de la couche 7 de matière calorifuge. Des raidisseurs 10 ayant une structure en S, par exemple, sont fixés à divers endroits autour de la paroi du conduit, afin de la renforcer. La structure particulière en S leur permet de servir de support à la paroi 1 extérieure qui entoure le calorifugeage. Ainsi cette paroi, maintenue et fixée, sur ces raidisseurs est également renforcée par ceux-ci.

De préférence, la couche 7 de matériau calorifuge est emprisonnée d'une manière étanche entre la paroi 2 du conduit et la paroi 1 extérieure. Pour cela, des moyens lient la paroi 1 extérieure à la paroi 2 du conduit à proximité de chaque extrémité ou ouverture du conduit.

De préférence, la paroi 1 extérieure est obtenue à l'aide d'une tôle mince, en matériau inoxydable.

Cette tôle est enroulée autour de la couche 7 de matériau calorifuge, et est refermée sur elle-même par un chevauchement de façon à former un cylindre. Afin d'obtenir une étanchéité au niveau de la fermeture, cette dernière est réalisée par soudage. Le soudage peut être du type capacitif, c'est-à-dire que deux électrodes sont mises l'une à proximité de l'autre au contact de la tôle, sur la face externe, sur la partie où existe le chevauchement. Lorsque le courant passe, les deux épaisseurs de tôle se fixent l'une sur l'autre.

La tôle mince, peut, préalablement à son utilisation, être gaufrée, ce qui lui confère une plus grande rigidité. Les gaufrages 11 apparaissent sur la partie inférieure de la figure.

La liaison étanche aux extrémités du conduit entre la paroi 1 extérieure et la paroi 2 intérieure peut s'effectuer par des raidisseurs 12, 13 supplémentaires situés à proximité de chaque ouverture de la tuyère, et ayant par exemple une structure semblable à ceux utilisés pour le maintien de la paroi 1 extérieure autour du matelas calorifuge.

Ces raidisseurs, par exemple réalisés en tôle pliée sont fixés par soudage 14, d'une part sur la paroi 1 extérieure, et d'autre part sur la paroi 2 intérieure. En outre, ils concourent au renfort des extrémités de la tuyère.

Une autre façon (non représentée) de réaliser une liaison étanche au niveau des extrémités est de rabattre l'extrémité de la paroi 1 extérieure sur l'extrémité de la paroi 2 intérieure et d'effectuer le soudage 14 directement entre ces deux parois.

De préférence, plusieurs couches 5, 6, 7 de matériau calorifuge sont intercalées entre la paroi 1 extérieure et la paroi 2 intérieure.

Ces couches sont séparées, de préférence, par des écrans 3, 4 réflecteurs, par exemple en aluminium. Il est possible également de fixer, préalablement à la mise en place du revêtement calorifuge des raidisseurs 8, 9 complémentaires autour de la paroi 2 de l'enceinte ou du conduit. Ces raidisseurs ne sont en contact qu'avec ladite paroi 2 mais ils concourent néanmoins à la rigidité de l'ensemble. Ils peuvent par exemple avoir une structure en oméga.

L'invention présente un très grand avantage sur le plan du poids de l'ensemble obtenu. En effet, dans l'art antérieur, le revêtement calorifuge, et la paroi de la tuyère étaient séparément renforcés par des raidisseurs.

Grâce à la réalisation d'un revêtement intégré, puisque la paroi du conduit est utilisée pour le maintien du calorifugeage, un nombre moins élevé de raidisseurs est nécessaire. Le gain moyen de poids pour un conduit ainsi calorifugé par rapport à un ensemble conduit et coquilles est de trente pour cent, ce qui est très important, surtout dans le domaine aéronautique.

La maintenance de la pièce ainsi réalisée est aisée. Auparavant, il fallait retirer les coquilles pour ôter les produits qui s'infiltraient entre le conduit et les coquilles. Chaque démontage présentait des risques de détérioration des parois extérieures et intérieures.

Avec l'invention, il n'y a plus de danger d'infiltration. Seuls subsistent des risques de chocs sur la paroi 1 extérieure. Si la paroi 1 extérieure est détériorée, suite à un choc, il suffit, à l'endroit abîmé, de fixer directement sur la paroi 1 extérieure un morceau de tôle mince afin de réparer et ce, sans déposer la pièce.

Dans l'exemple, une couronne 15 fixée sur la paroi 2 de la tuyère permet la fixation de façon connue de la tuyère calorifugée au bloc moteur.

L'exemple décrit peut aisément être étendu à une enceinte de stockage de liquide ou de gaz.

**Revendications**

1. Pièce calorifugée pour l'aéronautique, comportant un conduit de transport ou une enceinte de stockage de liquide ou de gaz, au moins une couche (7) de matériau calorifuge disposée autour de la surface extérieure de la paroi (2) de l'enceinte ou du conduit et une paroi (1) extérieure autour du matériau calorifuge, caractérisée en ce que la paroi (1) extérieure est en tôle mince par rapport à la paroi de l'enceinte ou du conduit et en ce que des raidisseurs (10) radiaux sont disposés entre les deux parois (1, 2), chaque raidisseur entourant la paroi de l'enceinte ou du conduit, et étant fixé à chacune des deux parois, de façon à servir de renfort à la structure de l'ensemble et de support à ladite paroi (1) extérieure.

2. Pièce selon la revendication 1, caractérisée en ce que plusieurs couches (5, 6, 7) de matériau calorifuge sont déposées autour de la surface extérieure de la paroi (2) de l'enceinte ou du conduit et en ce que les plaques (3, 4) déflectrices, en particulier des feuilles d'aluminium, sont intercalées entre les différentes couches de matériau calorifuge.

3. Pièce selon la revendication 1, caractérisée en ce qu'une liaison est réalisée entre la paroi (1) extérieure et la paroi (2) de l'enceinte ou du conduit à proximité de chaque ouverture ou orifice de l'enceinte ou du conduit.

4. Pièce selon la revendication 3, caractérisée en ce que la liaison entre la paroi (1) extérieure et la paroi (2) de l'enceinte ou du conduit est réalisée par rabattement et fixation de la paroi (1) extérieure sur le bord de chaque ouverture ou orifice.

5. Pièce selon la revendication 3, caractérisée en ce que la liaison entre la paroi (1) extérieure et la paroi (2) de l'enceinte ou du conduit est réalisée grâce à des raidisseurs (12, 13) supplémentaires solidaires de la paroi (1) extérieure et de la paroi (2) de l'enceinte ou du conduit, et fixés à proximité de chaque ouverture ou orifice.

6. Pièce selon l'une quelconque des revendications précédentes, caractérisée en ce que la paroi (1) extérieure est en matériau inoxydable.

7. Pièce selon la revendication 6, caractérisée en ce que la tôle mince est renforcée par des gaufrages (11) antérieurement à sa mise en place.

8. Pièce selon l'une quelconque des revendications précédentes, caractérisée en ce que le matériau calorifuge est emprisonné de façon étanche entre les deux parois.

9. Pièce selon la revendication 8, caractérisée en ce que le matériau calorifuge est enfermé de façon étanche entre les deux parois (1, 2) grâce à un soudage de ces parois entre elles ou aux raidisseurs (10, 12, 13).

10. Pièce selon l'une quelconque des revendications précédentes, caractérisée en ce que des raidisseurs (8, 9) complémentaires sont fixés autour de la paroi (2) de l'enceinte ou du conduit.

## Claims

1. A thermally insulated member for the aviation, comprising a liquid or gas transport conduit or storing chamber, at least one layer (7) of thermally insulating material around the outer surface of the wall (2) of the chamber or conduit and an outer wall (1) around the thermally insulating material, characterized in that the outer wall (1) is of a sheet which is thin compared to the wall of the chamber or conduit, and in that radial struts (10) are arranged between the two walls (1, 2), each strut surrounding the wall of the chamber or conduit, and being fixed to each of the two walls in a manner to be useful as a reinforcement of the structure of the entire unit and a support of said outer wall (1).

2. Member according to claim 1, characterized in that a plurality of layers (5, 6, 7) of thermally insulating material are arranged about the outer surface of the wall (2) of the chamber or conduit and in that deflecting plates (3, 4), in particular aluminum foils, are inserted between the different layers of thermally insulating material.

3. Member according to claim 1, characterized in that a connection is established between the outer wall (1) and the wall (2) of the chamber or conduit in the neighborhood of each opening or orifice of the chamber or conduit.

4. Member according to claim 3, characterized in that the connection between the outer wall (1) and the wall (2) of the chamber or conduit is embodied by folding the outer wall (1) on the edge of each opening or orifice and fixing it thereto.

5. Member according to claim 3, characterized in that the connection between the outer wall (1) and the wall (2) of the chamber or conduit is embodied by additional struts (12, 13) joining the outer wall (1) and the wall (2) of the chamber or conduit, and fixed in the neighborhood of each opening or orifice.

6. Member according to any of the preceding claims, characterized in that the outer wall (1) is of an inoxidizable material.

7. Member according to claim 6, characterized in that the thin sheet is reinforced by embossings (11) prior to its installation.

8. Member according to any of the preceding claims, characterized in that the thermally insulating material is tightly enclosed between the two walls.

9. Member according to claim 8, characterized in that the thermally insulating material is tightly enclosed between the two walls (1, 2) due to these walls being welded to each other or to the struts (10, 12, 13).

10. Member according to any of the preceding claims, characterized in that additional struts (8, 9) are affixed around the wall (2) of the chamber or conduit.

## Patentansprüche

1. Wärmegedämmtes Teil für die Luftfahrt, mit einer Transportleitung oder einer Speicherkammer für Flüssigkeit oder Gas, wenigstens einer Schicht (7) aus wärmedämmendem Material, welche um die Außenoberfläche der Wand (2) der Kammer oder der Leitung herum angeordnet ist, und einer Außenwand (1), welche das wärmedämmende Material umgibt, dadurch gekennzeichnet, daß die Außenwand (1) aus einem Blech ist, welches dünn gegenüber der Wand der Kammer oder Leitung ist, und daß radiale Versteifungen (10) zwischen den beiden Wänden (1, 2) angeordnet sind, wobei jede Versteifung die Wand der Kammer oder Leitung umgibt und mit jeder dieser Wände verbunden ist, dergestalt, daß sie als Verstärkung der Struktur der Gesamtheit und Träger der genannten Außenwand (1) dient.

2. Teil nach Anspruch 1, dadurch gekennzeichnet, daß mehrere Schichten (5, 6, 7) aus wärmedämmendem Material um die Außenoberfläche der Wand (2) der Kammer oder Leitung herum angeordnet sind und daß Ablenkplatten (3, 4), insbesondere Aluminiumfolien, zwischen die verschiedenen Schichten wärmedämmenden Materials eingefügt sind.

3. Teil nach Anspruch 1, dadurch gekennzeichnet, daß eine Verbindung zwischen der Außenwand (1) und der Wand (2) der Kammer oder Leitung in der Nähe jeder Öffnung oder Mündung der Kammer bzw. Leitung hergestellt ist.

4. Teil nach Anspruch 3, dadurch gekennzeichnet, daß die Verbindung zwischen der Außenwand (1) und der Wand (2) der Kammer oder Leitung dadurch hergestellt ist, daß die Außenwand (1) auf den Rand jeder Öffnung oder Mündung umgeschlagen und daran befestigt ist.

5. Teil nach Anspruch 3, dadurch gekennzeichnet, daß die Verbindung zwischen der Außenwand (1) und der Wand (2) der Kammer oder Leitung durch zusätzliche Versteifungen (12, 13) hergestellt ist, die fest mit der Außenwand (1) und der Wand (2) der Kammer oder Leitung verbunden sowie in der Nähe jeder Öffnung oder Mündung befestigt sind.

6. Teil nach einem der vorstehenden Ansprüche, dadurch gekennzeichnet, daß die Außenwand (1) aus nichtoxidierendem Material besteht.

7. Teil nach Anspruch 6, dadurch gekennzeichnet, daß das dünne Blech durch eine Prägestruktur (11) verstärkt ist, die vor seinem Einbau angebracht wurde.

8. Teil nach einem der vorstehenden Ansprüche, dadurch gekennzeichnet, daß das wärmedämmende Material dicht zwischen den zwei Wänden eingeschlossen ist.

9. Teil nach Anspruch 8, dadurch gekennzeichnet, daß das wärmedämmende Material dicht zwischen den zwei Wänden (1) durch Verschweißen dieser Wände miteinander oder mit den Versteifungen (10, 12, 13) eingeschlossen ist.

10. Teil nach einem der vorstehenden Ansprüche, dadurch gekennzeichnet, daß zusätzliche Versteifungen (8, 9) um die Wand (2) der Kammer oder Leitung herum befestigt sind.